(19) Europäisches Patentamt
European Patent Office
Office européen des brevets

(11) EP 1 365 653 B1

(12) # EUROPEAN PATENT SPECIFICATION

(45) Date of publication and mention of the grant of the patent: **01.12.2004 Bulletin 2004/49**

(21) Application number: **02732676.8**

(22) Date of filing: **07.03.2002**

(51) Int Cl.[7]: **A01N 43/40**
// (A01N43/40, 43:76), A01N43:50

(86) International application number: **PCT/EP2002/004613**

(87) International publication number: **WO 2002/069712 (12.09.2002 Gazette 2002/37)**

(54) **FUNGICIDAL COMPOSITIONS BASED ON PYRIDYLMETHYLBENZAMIDE DERIVATIVES AND AT LEAST ONE COMPLEX III INHIBITING COMPOUND**

FUNGIZIDE ZUSAMMENSETZUNGEN AUF DER BASIS VON PYRIDYLMETHYLBENZAMID-DERIVATE UND MINDESTENS EINER DER KOMPLEX III HEMMENDER VERBINDUNG

COMPOSITIONS FONGICIDES A BASE DE DERIVES DE PYRIDYLMETHYLBENZAMIDE ET D'AU MOINS UN COMPOSE INHIBITEUR DU COMPLEXE III

(84) Designated Contracting States:
**AT BE CH CY DE DK ES FI FR GB GR IE IT LI LU MC NL PT SE TR**

(30) Priority: **08.03.2001 FR 0103140**

(43) Date of publication of application: **03.12.2003 Bulletin 2003/49**

(73) Proprietor: **Bayer CropScience S.A.**
**69009 Lyon (FR)**

(72) Inventors:
- **HOLAH, David, Stanley**
  **West Wratting Cambridgeshire CB1 5NE (GB)**
- **DANCER, Jane, Elisabeth**
  **Cambridge CB1 1DT (GB)**
- **LATORSE, Marie-Pascale**
  **F-69490 Saint Romain De Popey (FR)**
- **MERCER, Richard**
  **F-69130 Ecully (FR)**

(56) References cited:
**WO-A-99/42447**

EP 1 365 653 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The subject of the present invention is a novel fungicidal composition comprising at least one pyridylmethylbenzamide derivative and at least one compound capable of inhibiting the transport of electrons of the respiratory chain of mitochondrial ubiquinol:ferricytochrome-c oxidoreductase (also known as complex III) in phytopathogenic fungal organisms; their use in protecting crops; and a method of protecting crops against fungal diseases.

Compounds of the pyridylmethylbenzamide type with fungicidal action, which make it possible to prevent the growth and the development of phytopathogenic fungi which attack or are capable of attacking crops, are known, from European patent application EP-A-1 056 723.

Moreover, fungicidal compounds capable of inhibiting the transport of electrons of the respiratory chain of mitochondrial ubiquinol:ferricytochrome-c oxidoreductase in phytopathogenic fungal organisms are known, especially imidazoline and oxazolidine derivatives which are already known in the field of the treatment of phytopathogenic diseases of crops. Such derivatives are, for example, fenamidone and famoxadone, as well as their isomers and agriculturally acceptable addition salts with an acid.

French patent application FR-2 722 652 discloses certain mixtures of fenamidone with fungicidal compounds, but this publication is silent as regards mixtures with pyridylmethylbenzamide derivatives.

However, it is still desirable to improve the products which can be used by farmers for controlling fungal diseases of crops, and in particular mildews.

It is also still desirable to reduce the doses of chemical products spread in the environment in order to control fungal attacks of crops, in particular by reducing the doses of the products for application.

It is finally still desirable to increase the number of antifungal products available to farmers for them to find among them the fungicidal agent best suited to their particular use.

One aim of the invention is therefore to provide a novel fungicidal composition useful for solving the problems disclosed above.

Another aim of the invention is to provide a novel fungicidal composition useful in the preventive and curative treatment of fungal diseases, for example of solanaceous plants, of cereals and of grapevine.

Another aim of the invention is to provide a novel fungicidal composition exhibiting improved efficacy against mildews, oidiums, rusts, botrytis diseases of cereals, of solanaceous plants and of grapevine.

Another aim of the invention is to provide a novel fungicidal composition having improved efficacy against mildew and/or oidium and/or Botrytis disease of grapevine.

It has now been found that these aims could be achieved completely or in part by means of the fungicidal compositions according to the present invention.

The subject of the present invention is therefore, fungicidal compositions comprising:

a) at least one compound (I) which is a pyridylmethylbenzamide derivative of formula (I):

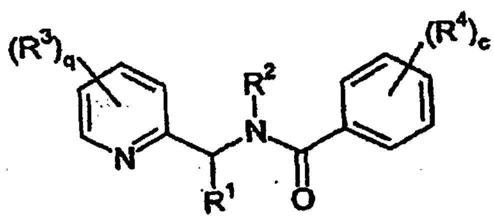

(I)

in which:

- $R^1$ is chosen from a hydrogen atom, an unsubstituted or substituted alkyl radical and an unsubstituted or substituted acyl or alkoxycarbonyl radical;
- $R^2$ is chosen from a hydrogen atom and an unsubstituted or substituted alkyl radical;
- $R^3$ and $R^4$, which are identical or different, are independently chosen from a halogen atom, the hydroxyl radical, the cyano radical, the nitro radical, the $-SF_5$ radical, the trialkylsilyl radical, an unsubstituted or substituted amino radical, an acyl radical, an alkoxycarbonyl radical, and a group E, OE or SE, in which E is chosen from an alkyl, alkenyl, alkynyl, cycloalkyl, cycloalkenyl, aryl and heterocyclyl radical, each of which is unsubstituted or substituted;
- c represents 0, 1, 2, 3, 4 or 5;

- q represents 0, 1, 2, 3 or 4;

or an agriculturally acceptable acid addition salt thereof; and
b) at least one compound (II) capable of inhibiting the transport of electrons of the respiratory chain of mitochondrial ubiquinol:ferricytochrome-c oxidoreductase (complex III) in phytopathogenic fungal organisms and an agriculturally acceptable carrier and/or surfactant.

In this specification, including the accompanying claims, the various radicals and chemical terms used have, unless otherwise stated, the following meanings:

- "alkyl" or "alkyl-" denotes a linear or branched saturated hydrocarbon radical containing from 1 to 6 carbon atoms;
- "alkenyl" denotes a linear or branched hydrocarbon radical containing from 2 to 6 carbon atoms and an unsaturation in the form of a double bond;
- "alkynyl" denotes a linear or branched hydrocarbon radical containing from 2 to 6 carbon atoms and an unsaturation in the form of a triple bond;
- "alkoxy" denotes an alkyl-oxy radical;
- "acyl" denotes the formyl radical or an alkylcarbonyl radical;
- "cycloalkyl" denotes a saturated cyclic hydrocarbon radical containing from 3 to 8 carbon atoms;
- "aryl" denotes a phenyl or naphthyl radical;
- "heterocyclyl" denotes an unsaturated or completely or partially saturated cyclic radical containing from 3 to 8 atoms, chosen from carbon, nitrogen, sulphur and oxygen, preferably including 1, 2 or 3 heteroatoms, for example pyridyl, quinolyl, furyl, thienyl, pyrrolyl, oxazolinyl;
- the term "substituted" means that the radicals thus described are substituted with one or more radicals chosen from chlorine, bromine, fluorine, iodine, alkyl, alkoxy, hydroxyl, nitro, amino; cyano and acyl.

It will be understood that the compounds of formula (I) or (II) may exist as optical isomers, geometric isomers or tautomers. All such forms are embraced in the present invention.
When the compounds (I) or (II) exist as optical isomers they may be used in the form of individual enantiomers or mixtures of enantiomers in any proportion, including racemic mixtures.
The compounds of formula (I) are for example described in published patent application EP-A-1 056 723. Preferred compounds (I) possess at least one of the following characteristics taken in isolation or in combination:

- $R^1$ and $R^2$ which are identical or different, are independently chosen from a hydrogen atom and an optionally substituted alkyl radical;
- $R^3$ and $R^4$, which are identical or different, are independently chosen from a halogen atom, the hydroxyl radical, the nitro radical, an unsubstituted or substituted amino radical, an acyl radical, and a group E,.OE or SE, in which E is chosen from an alkyl, cycloalkyl, phenyl and heterocyclyl radical, it being possible for each of them to be unsubstituted or substituted;
- c represents 0, 1, 2 or 3;
- q represents 0, 1, 2 or 3.

Especially preferred the compounds possess the following characteristics, taken in isolation or in combination:

- $R^1$ and $R^2$, which are identical or different, are independently chosen from a hydrogen atom and a methyl or ethyl radical;
- $R^3$ and $R^4$, which are identical or different, are independently chosen from a halogen atom, the nitro radical, an unsubstituted or substituted amino radical and an alkyl, cycloalkyl, phenyl or heterocyclyl radical, it being possible for each of them to be unsubstituted or substituted;
- c represents 1 or 2;
- q represents 1 or 2.

More particularly, the compounds of (I) possess the following characteristics:

- $R^1$ and $R^2$ each represent a hydrogen atom;
- $R^3$ and $R^4$ which are identical or different, are independently chosen from a halogen atom, the nitro radical, an alkyl radical and the trifluoromethyl radical;
- c and q represent, independently of each other, 2.

By way of example, the following compounds of formula (I) are most particularly preferred:

- compound (Ia): 2,6-dichloro-*N*-{[3-chloro-5-(trifluoromethyl)-2-pyridinyl]methyl}benzamide;
- compound (Ib): *N*-{[3-chloro-5-(trifluoromethyl)-2-pyridinyl]methyl}-2-fluoro-6-nitrobenzamide;
- compound (Ic): *N*-{[3-chloro-5-(trifluoromethyl)-2-pyridinyl]methyl}-2-methyl-6-nitrobenzamide;

as well as their agriculturally acceptable addition salts with an acid.

Usually, the compounds (II) according to the invention may be divided into at least two groups which are:

- on the one hand, the compounds (IIa) capable of inhibiting the reduction of ubiquinone, at a domain of complex III called $Q_{in}$ or $Q_i$;
- on the other hand, compounds (IIb) capable of inhibiting the reduction of ubiquinol, at a domain of complex III called $Q_{out}$ or $Q_o$.

The origin of the nomenclature of the target enzyme of the compounds (II) of the present invention is available via the publication *Enzyme nomenclature 1992*, which is in particular accessible via the internet at the address www.chem.qmw.ac.uk/iubmb/enzyme or via the publication *Enzyme Nomenclature 1992* [Academic Press, San Diego, California, ISBN 0-12-227164-5 (hardback), 0-12-227165-3 (paperback)] et Supplement 1 (1993), Supplement 2 (1994), Supplement 3 (1995), Supplement 4 (1997) and Supplement 5 (in Eur. J. Biochem. 1994, 223, 1-5; Eur. J. Biochem. 1995, 232, 1-6; Eur. J. Biochem. 1996, 237, 1-5; Eur. J. Biochem. 1997, 250; 1-6, and Eur. J. Biochem. 1999, 264, 610-650; respectively) [Copyright IUBMB].

The compounds (IIa) according to the invention, include cyazofamid and antimycin.

The compounds (IIb) according to the invention, include the synthetic or natural derivatives of strobilurine, in particular azoxystrobin, dicostrobin, kresoxim-methyl, metominostrobin, pyraclostrobin, pycoxystrobin or trifloxystrobin.

Other compounds (IIb) according to the invention, include in particular fenamidone, having the chemical name (S)-1-anilino-4-methyl-2-methylthio-4-phenylimidazolin-5-one, which is described for example in "The Pesticide Manual", 12th edition, C D S Tomlin, British Crop Protection Council, page 378, No. 318, as well as its agriculturally acceptable addition salts with an acid, or famoxadone, having the chemical name 3-anilino-5-methyl-5-(4-phenoxyphenyl)-1,3-oxazolidine-2,4-dione, which is described for example in "The Pesticide Manual", 11th edition, C D S Tomlin, British Crop Protection Council, pages 500-501, No. 296, as well as its isomers and agriculturally acceptable addition salts with an acid.

Advantageously, the compositions according to the present invention comprise compound (Ia) or compound (Ib) or compound (Ic) with fenamidone or famoxadone. The preferred compositions of the present invention comprise compound (Ia) with fenamidone or famoxadone.

Thus, the present invention relates to fungicidal compositions comprising at least one pyridylmethylbenzamide derivative of formula (I), as defined above and at least one compound (II) as defined above, the compound (I)/compound (II) ratio generally being from 1/10 to 10/1, preferably from 1/5 to 5/1, more preferably still from 1/5 to 2/1, most particularly 1/2.

The compound (I)/compound (II) ratio is defined as the ratio by weight of these two compounds. The same is true of any ratio of two chemical compounds, which is subsequently mentioned in the present text, in so far as a different definition of this ratio is not expressly indicated.

It will be understood that the fungicidal compositions of the invention may contain a single compound (I) or more than one such compound and a single compound (II) or more than one such compound, as well as one or more other compounds, eg fungicidal compounds, herbicidal compounds, insecticidal compounds and/or plant growth regulators, according to the use for which they are intended.

Thus, the fungicidal compositions according to the present invention may also comprise, for example, one or more other fungicidal active ingredients chosen from acibenzolar-S-methyl, benalaxyl, benomyl, blasticidin-S, bromuconazole, captafol, captan, carbendazim, carboxin, carpropamide, chlorothalonil, fungicidal compositions based on copper, derivatives of copper such as copper hydroxide and copper oxychloride, cymoxanil, cyproconazole, cyprodinyl, dichloran, diclocymet, diethofencarb, difenoconazole, diflumetorim, dimethomorph, diniconazole, dodemorph, dodine, edifenphos, epoxyconazole, ethaboxam, ethirimol, fenarimol, fenbuconazole, fenhexamide, fenpiclonil, fenpropidin, fenpropimorph, ferimzone, fluazinam, fludioxonil, flumetover, fluquinconazole, flusilazole, flusulfamide, flutolanil, flutriafol, folpel, furalaxyl, furametpyr, guazatine, hexaconazole, hymexazole, imazalil, iprobenphos, iprodione, isoprothiolane, kasugamycin, mancozeb, maneb, mefenoxam, mepanipyrim, metalaxyl and its enantiomeric forms such as metalaxyl-M, metconazole, metiram-zinc, oxadixyl, pefurazoate, penconazole, pencycuron, phosphorous acid and its derivatives such as fosetyl-Al, phthalide, probenazole, prochloraz, procymidone, propamocarb, propiconazole, pyrimethanil, pyroquilon, quinoxyfen, silthiofam, simeconazole, spiroxamine, tebuconazole, tetraconazole, thiabendazole, thifluzamide, thiophanate, for example thiophanate-methyl, thiram, triadimefon, triadimenol, tricyclazole, tridemorph, triticonazole, derivatives of valinamide such as, for example, iprovalicarb, vinclozolin, zineb and zoxamide.

The invention provides a method for controlling phytopathorganic fungi of a crop at a locus which comprises applying thereto a compound (I) and a compounds (II).

The invention thus provides a method for controlling, curatively or preventively, the phytopathogenic fungi of crops, characterized in that an effective (agronomically effective) and nonphytotoxic quantity of a fungicidal composition according to the invention is applied to the soil where plants grow or are capable of growing, to the leaves and/or the fruit of plants or to the seeds of plants.

The compositions according to the invention are advantageous for controlling the fungal diseases of numerous crops, such as for example cereals, vegetables, solanaceous plants, market garden crops, grapevine, fruit in general, and in particular mildews, Septoria diseases, *Pythium sp.* of these crops.

The compositions of the invention generally appreciably improve the respective and isolated actions of compound (I) and of compound (II) on a number of fungi that are particularly harmful in crops, in particular for grapevine, more particularly on vine downy mildew, while preserving an absence of phytotoxicity towards these crops. The activity spectrum may be improved and the respective dose of each active ingredient used may be reduced, the latter quality being particularly important for easily understandable ecological reasons.

The term "synergistic effect" as used in this specification including the accompanying claims is understood to mean in particular that defined by Colby S.R. in an article entitled "Calculation of the synergistic and antagonistic responses of herbicide combinations" *Weeds*, (1967), 15, pages 20-22.

The latter article uses the formula:

$$E = X + Y - \frac{XY}{100}$$

in which E represents the expected percentage of inhibition of a disease for a combination of the two fungicides at defined doses (for example equal to x and y respectively), X is the percentage of inhibition observed for the disease by the compound (I) at a defined dose (equal to x), Y is the percentage of inhibition observed for the disease by the compound (II) at a defined dose (equal to y). When the percentage of inhibition observed for the combination is greater than E, there is a synergistic effect.

The term "synergistic effect" also means the effect demonstrated by application of the Tammes method, "Isoboles, a graphic representation of synergism in pesticides", Netherlands Journal of Plant Pathology, 70(1964), pages 73-80.

The existence of synergism between compound (I) and compound (II) can be demonstrated by a person skilled in the art by routine testing on the basis of the present disclosure.

The compound (I)/compound (II) ratio in the invention is advantageously from 1/10 to 10/1, preferably from 1/5 to 5/1.

In general, the compositions according to the invention have shown good results when the compound (I)/ compound (II) ratio is equal to or close to 1/2.

The invention also comprises a method for controlling phytopathogenic fungi of a crop at a locus which comprises applying thereto a compound (I) and a compound (II).

It is possible to apply a composition containing the two active ingredients, or, either simultaneously, separately or sequentially so as to obtain the conjugated effect, two compositions each containing one of the two active ingredients.

These compositions cover not only compositions which are ready to be applied to the crop to be treated by means of a suitable device, such as a spraying device, but also commercial concentrated compositions which need to be diluted before they are applied onto the crop.

The present invention provides a method for controlling, a large variety of phytopathogenic diseases of crops, in particular for controlling Septoria leaf blotch and mildew. These diseases can be controlled, for example, by direct application to the leaves.

The present invention thus provides a method for controlling, curatively or preventively, the phytopathogenic diseases of crops, which comprises treatment of said crop (for example by application or by administration) with an effective and non-phytotoxic amount of a combination as defined above. The expression "treatment of the crop" means an application or administration of a fungicidal composition as described above onto, for example, the aerial parts of the crops or onto the soil in which they are growing and which are infested or liable to become infested with a phytopathogenic disease, such as mildew or Septoria leaf blotch. The expression "treatment of the crop" also means treatment of the reproduction products of the crop, such as the seeds or the tubers, for example.

The compositions described below are used in general for application onto growing vegetation, or onto areas in which crops are grown, or for the coating of or filmcoating of seeds.

Among the means which are suitable for applying the compositions according to the invention, mention may be made of the use of powders, foliar sprays, granules, mists or foams, or alternatively means in the form of suspensions

of finely divided or encapsulated compositions; for the treatments of soils or roots with liquid imbibitions, powders, granules, fumes or foams; for application onto plant seeds, the use, as agents for film-coating or coating seeds, of powders or liquid broths.

The compositions according to the invention are, appropriately, applied to vegetation and in particular to the leaves infested with the phytopathogenic fungi. Another method for applying the compounds or compositions according to the invention is to add a formulation containing the active ingredients, to the irrigation water. This irrigation can be an irrigation using sprinklers.

The formulations which are suitable for the applications of the compositions according to the invention comprise formulations which are suitable for use in the form, for example, of sprays, powders, granules, mists, foams or emulsions.

In practice, for controlling the phytopathogenic diseases of crops, one method, for example, comprises applying an effective amount of a composition according to the invention onto the plants or onto the medium in which they are growing. For such a method, the active ingredients are generally applied onto the same area in which the infestation needs to be controlled, at an effective dose of from about 0.05 g to about 500 g of active ingredients per hectare of area treated. Under ideal conditions, depending on the nature of the phytopathogenic fungus to be treated, a lower dose may offer adequate protection. Conversely, poor climatic conditions, resistance or other factors may require higher doses of active ingredients.

The effective working doses of the combinations used in the invention can vary within wide proportions, in particular depending on the nature of the phytopathogenic fungi to be eliminated or the degree of infestation, for example, of the plants with these fungi.

The optimum dose usually depends on several factors, for example on the type of phytopathogenic fungus to be treated, on the type or level of development of the infested plant, on the density of vegetation, or alternatively on the method of application. An effective dose of active ingredients (I) and (II) is generally from about 0.1 g/ha to about 200 g/ha.

For their use in practice, the compositions according to the invention can be used alone and can also advantageously be used in formulations containing one or other of the active ingredients or alternatively both of them together, in combination or association with one or more other compatible components which are, for example, solid or liquid fillers or diluents, adjuvants, surfactants or equivalents, which are suitable for the desired use and which are acceptable for use in agriculture. The formulations can be of any type known in the sector which are suitable for application onto all types of plantations or crops. These formulations, which can be prepared in any manner known in this sector, also form part of the invention.

The formulations can also contain ingredients of other types, such as protective colloids, adhesives, thickeners, thixotropic agents, penetrating agents, oils for spraying, stabilizers, preserving agents (in particular mouldproofing agents), sequestering agents or the like, as well as other known active ingredients which have pesticidal properties (in particular fungicidal, insecticidal, acaricidal or nematocidal properties) or which have properties of regulating plant growth. More generally, the compounds used in the invention can be combined with any solid or liquid additives corresponding to the usual formulation techniques.

In general, the formulations according to the invention usually contain from about 0.05% to about 98.9% (by weight) of one or more combinations according to the invention, from about 1% to about 95% of one or more solid or liquid fillers and, optionally, from about 0.1% to about 50% of one or more other compatible compounds, such as surfactants.

In the present account, the term "filler" means an organic or inorganic, natural or synthetic component with which the active components are combined to facilitate its application, for example, onto the plants, the seeds or the soil. This filler is consequently generally inert and it must be acceptable (for example acceptable for agronomic uses, in particular for treating plants).

The filler can be solid, for example clays, natural or synthetic silicates, silica, resins, waxes, solid fertilizers (for example ammonium salts), natural soil minerals, such as kaolins, clays, talc, lime, quartz, attapulgite, montmorillonite, bentonite or diatomaceous earths, or synthetic minerals, such as silica, alumina or silicates, in particular aluminium or magnesium silicates. The solid fillers which are suitable for granules include: natural, crushed or broken rocks, such as calcite, marble, pumice, sepiolite and dolomite; synthetic granules of inorganic or organic flours; granules of organic material such as sawdust, coconut shell, corn ear or envelope, or tobacco stem; kieselguhr, tricalcium phosphate, powdered cork or adsorbent carbon black; water-soluble polymers, resins, waxes; or solid fertilizers. Such compositions can, if so desired, contain one or more compatible agents such as wetting agents, dispersing agents, emulsifiers or colourings which, when they are solid, can also act as diluents.

The fillers can also be liquid, for example: water, alcohols, in particular butanol or glycol, as well as ethers or esters thereof, in particular methyl glycol acetate; ketones, in particular acetone, cyclohexanone, methyl ethyl ketone, methyl isobutyl ketone or isophorone; petroleum fractions such as paraffinic or aromatic hydrocarbons, in particular xylenes or alkylnaphthalenes; mineral or plant oils; aliphatic chlorohydrocarbons, in particular trichloroethane or methylene chloride; aromatic chlorohydrocarbons, in particular chlorobenzenes; water-soluble or highly polar solvents such as dimethylformamide, dimethyl sulphoxide, N,N-dimethylacetamide or N-methylpyrrolidone; N-octylpyrrolidone, liquefied gases; whether they are taken separately or as a mixture.

The surfactant can be an emulsifier, a dispersing agent or a wetting agent, of ionic or nonionic type or a mixture of these surfactants. Among those surfactants there are used, for example, polyacrylic acid salts, lignosulphonic acid salts, phenolsulphonic or naphthalenesulphonic acid salts, polycondensates of ethylene oxide with fatty alcohols or fatty acids or fatty esters or fatty amines, substituted phenols (in particular alkylphenols or arylphenols), ester-salts of sulphosuccinic acid, taurine derivatives (in particular alkyl taurates), phosphoric esters of alcohols or of polycondensates of ethylene oxide with phenols, fatty acid esters with polyols, or sulphate, sulphonate or phosphate functional derivatives of the compounds described above. The presence of at least one surfactant is generally necessary when the active ingredients and/or the inert filler are insoluble or only sparingly soluble in water and when the filler for the said composition to be applied is water.

The formulations according to the invention can also contain other additives such as adhesives or colourings. Adhesives such as carboxymethylcellulose, or natural or synthetic polymers in the form of powders, granules or matrices, such as gum arabic, latex, polyvinylpyrrolidone, polyvinyl alcohol or polyvinyl acetate, natural phospholipids, such as cephalins or lecithins, or synthetic phospholipids can be used in the formulations. It is possible to use colourings such as inorganic pigments, such as, for example: iron oxides, titanium oxides, Prussian blue; organic colouring stuffs, such as those of the alizarin, azo or metal phthalocyanin type; or of trace elements such as iron, manganese, boron, copper, cobalt, molybdenum or zinc salts.

The formulations containing the compositions of the invention, which are used to control the phytopathogenic fungi of crops, can also contain stabilizers, other fungicidal agents, insecticides, acaricides, nematicides, anti-helminths or bactericides, repellant agents or pheromones for arthropods or vertebrates, deodorizers, flavourings or colourings.

These can be chosen for the purpose of improving the strength, the persistence, the safety, and the spectrum of action on the phytopathogenic fungi of crops or to make the composition capable of accomplishing other useful functions for the areas treated.

Solid or liquid formulations according to the invention include the following:

As solid formulations, there may be mentioned dustable powders (with a content of active ingredients which may be up to 100%) and granules, in particular those obtained by extrusion, spray-drying, compacting, impregnation of a granulated support, granulation from a powder (the content of active ingredients in these granules being from 0.5 to 80% for the latter cases).

Dustable powders include; formulations comprising 50 g of active ingredients and 950 g of talc; formulations comprising 20 g of active ingredients, 10 g of finely divided silica and 970 g of talc; these constituents are mixed and ground and the mixture is applied by dusting.

As liquid formulations or formulations intended to constitute liquid compositions during application, there may be mentioned solutions, in particular water-soluble concentrates, emulsifiable concentrates, emulsions, suspension concentrates, wettable powders (or spraying powder).

The suspension concentrates, which can be applied by spraying, are prepared so as to obtain a stable fluid product which does not sediment and which leads to good bioavailability of the active ingredients. These suspensions usually contain from 5% to 75% of active ingredients, preferably from 10% to 25%, from 0.5 to 75% of surfactants, preferably from 5% to 50%, from 0 to 10% of appropriate additives, such as thickening agents of organic or inorganic origin, antifoaming agents, corrosion inhibitors, adhesives, preservatives, such as for example Proxel GXL®, antifreezes and, as carrier, water or an organic liquid in which the active ingredients are sparingly soluble or are insoluble: certain organic solid substances or inorganic salts may be dissolved in the carrier in order to help prevent sedimentation or as antifreezes for water. In some cases, and in particular for formulations intended for the treatment of seeds, one or more colourings may be added.

For foliar applications, the choice of surfactants is important to ensure good bioavailability of the active ingredients; thus a combination of a surfactant with a hydrophilic character (HLB>10) and of a surfactant with a lipophilic character (HLB<5) will be preferably used. Such combinations of surfactants are, for example, described in French patent application No. 00 04015.

The following three Examples illustrate possible suspension concentrates suitable for various crops:

<u>Example SC 1 (in g/kg):</u>

This example is rather suitable for monocotyledonous crops (cereals, rice and the like)

- Active ingredients 150
- Surfactant with hydrophilic character (for example Rhodasurf 860P) 300
- Surfactant with lipophilic character (for example Plurafac LF 700) 150

- Ethoxylated tristyrylphenol phosphate 50
- Antifoam 5
- Propylene glycol 30
- Aerosil 200 20
- Attagel 50 40
- Water (qs 1 kg) 255

Example SC 2 (in g/kg):

This example is rather suitable for dicotyledonous crops (grapevine, fruit tree and the like)

- Active ingredients 150
- Surfactant with hydrophilic character (for example Rhodasurf 860P) 150
- Ethoxylated tristyrylphenol phosphate 50
- Antifoam 5
- Propylene glycol 30
- Aerosil 200 20
- Attagel 50 40
- Water (qs 1 kg) 555

Example SC 3 (in g/kg):

This example is more specifically suitable for the treatment of seeds.

- Active ingredients 50
- Surfactant with hydrophilic character (for example Rhodasurf 860P) 5
- Ethoxylated tristyrylphenol phosphate 15
- Antifoam 1
- Propylene glycol 30
- Colouring 20
- Rhodopol G 1.5
- Proxel GXL 1.5
- Water (qs 1 kg) 876

To prepare these formulations, the following procedure will preferably be used: the selected surfactants (surfactant with hydrophilic character + surfactant with lipophilic character + ethoxylated tristyrylphenol phosphate) are mixed with the required quantity of water, using a turbine stirrer; after homogenization, the other constituents of the formula, apart from the active ingredients, are then mixed.

The active ingredients and optionally the thickener of inorganic origin (Aerosil 200 and Attagel 50) are then added in order to obtain a medium having a viscous consistency. The mixture obtained is then ground using a high-speed grinding turbine and then a ball grinder until a D50 of the order of 1 to 3 µm and a D90 of between 3 and 8 µm are obtained.

In the case where no thickener of inorganic origin was used, the thickener of natural origin (Rhodopol G) is then added and the mixture is stirred until an appropriate viscosity is obtained.

Wettable powders (or spraying powder) are usually prepared such that they contain from 20% to 95% of active ingredients, and they usually contain, in addition to the solid carrier, from 0% to 30% of a wetting agent, from 3% to 20% of a dispersing agent, and, when necessary, from 0.1% to 10% of one or more stabilizers and/or other additives, such as penetrating agents, adhesives, agitating agents, colourings.

To obtain spraying powders or wettable powders, the active ingredients are intimately mixed in appropriate mixers with the additional substances and they are ground with mills or other appropriate grinders. Spraying powders are obtained whose wettability and suspension are advantageous; they can be suspended with water at any desired concentration and these suspensions can be very advantageously used in particular for application, for example, to the leaves of plants or to seeds.

The following Examples illustrate possible wettable powders (or spraying powders):

Example PM 1:

- Active ingredients 50%
- Ethoxylated fatty alcohol (wetting agent) 2.5%
- Ethoxylated phenylethylphenol (dispersing agent) 5%
- Chalk (inert carrier) 42.5%

Example PM 2:

- Active ingredients 10%
- Branched type C13 oxo synthetic alcohol ethoxylated with 8 to 10 ethylene oxide (wetting agent) 0.75%
- Neutral calcium lignosulphonate (dispersing agent) 12%
- Calcium carbonate (inert filler) qs 100%

Example PM 3:

This wettable powder contains the same ingredients as in the preceding example, in the proportions below:

- Active ingredients 75%
- Wetting agent 1.50%
- Dispersing agent 8%
- Calcium carbonate (inert filler) qs 100%

Example PM 4:

- Active ingredients 90%
- Ethoxylated fatty alcohol (wetting agent) 4%
- Ethoxylated phenylethylphenol (dispersing agent) 6%

Example PM 5:

- Active ingredients 50%
- Mixture of anionic and nonionic surfactants (wetting agent) 2.5%
- Sodium lignosulphonate (dispersing agent) 5%
- Kaolinic clay (inert carrier) 42.5%

The aqueous dispersions and emulsions, for example the compositions obtained by diluting a wettable powder according to the invention with water, fall within the general scope of the present invention. The emulsions may be of the water-in-oil or oil-in-water type and they may have a thick consistency such as that of a "mayonnaise".

The fungicidal compositions according to the invention may be formulated in the form of waterdispersible granules which also fall within the scope of the invention. These dispersible granules, having an apparent density which is generally from about 0.3 to 0.6, have a particle size which is generally from about 150 to 2 000 and preferably from 300 to 1 500 microns.

The active ingredient content of these granules is generally from about 1% to 90%, and preferably from 25% to 90%. The remainder of the granule is essentially composed of a solid filler and optionally of surfactant adjuvants which confer on the granule properties of dispersibility in water. These granules may be essentially of two distinct types according to whether the filler selected is soluble in water or not. When the filler is water-soluble, it may be inorganic or, preferably, organic. Excellent results have been obtained with urea. In the case of an insoluble filler, the latter is preferably inorganic, such as for example kaolin or bentonite. It is then advantageously accompanied by surfactants (in an amount of 2 to 20% by weight of the granule) of which more than half, for example, consists of at least one

essentially anionic dispersing agent such as an alkali or alkaline-earth metal polynaphthalenesulphonate or an alkali or alkaline-earth metal lignosulphonate, the remainder consisting of nonionic or anionic wetting agents such as an alkali or alkaline-earth metal alkyl naphthalenesulphonate. Moreover, although not essential, other adjuvants, such as foaming agents, may be added.

These granules may be used alone, in solution or dispersion in water so as to obtain the desired dose. They may also be used to prepare compositions with other active ingredients, in particular fungicides, the latter being in the form of wettable powders, or of granules or aqueous suspensions.

The granule may be prepared by mixing necessary ingredients, followed by granulation according to several techniques known per se (eg pelletizer, fluidized bed, spray-dryer, extrusion). The process generally ends with crushing, followed by sieving to the particle size chosen within the limits mentioned above. It is also possible to use granules obtained as above and then impregnated with a composition containing the active ingredients.

Preferably, it is obtained by extrusion, the procedure being carried out as indicated in the examples below.

<u>Example DG1: Dispersible granules</u>

90% by weight of the active ingredients and 10% of pearl urea are mixed in a mixer. The mixture is then ground in a toothed roll crusher. A powder is obtained which is moistened with about 8% by weight of water. The moist powder is extruded in a perforated roller extruder. A granule is obtained which is dried, and then crushed and sieved so as to retain respectively only the granules having a size of from 150 to 2 000 microns.

<u>Example DG2: Dispersible granules</u>

The following constituents are mixed in a mixer:

- Active ingredients 75%
- Wetting agent (sodium alkylnaphthalenesulphonate) 2%
- Dispersing agent (sodium polynaphthalenesulphonate) 8%
- Water-insoluble inert filler (kaolin) 15%

This mixture is granulated in a fluidized bed, in the presence of water, and then dried, crushed and sieved so as to obtain granules having a size of from 0.15 to 0.80 mm.

The fungicidal compositions according to the invention usually contain from 0.5 to 95% of the combination of compound (I) and compound (II). This may be.the concentrated composition, that is to say the commercial product combining compound (I) and compound (II). This may also be the dilute composition ready to be applied to the crops to be treated. In the latter case, the dilution with water may be carried out either using a commercial concentrated composition containing compound (I) and compound (II) (this mixture is called ready mix), or using the tank mix of two commercial concentrated compositions each containing compound (I) and compound (II).

The invention also provides, for example a method for controlling, curatively or preventively, the phytopathogenic fungi of crops, characterized in that an effective and nonphytotoxic quantity of a fungicidal composition according to the invention is applied to the plants to be treated.

The phytopathogenic fungi of crops which may be controlled by this process are, in particular, those:

- of the group of oomycetes:
    - of the genus *Phytophthora* such as *Phytophthora infestans* (mildew of Solanaceae, in particular late blight of potato or tomato),
    - of the family of Peronosporaceae, in particular *Plasmopara viticola* (vine downy mildew), *Plasmopara halstedii* (sunflower mildew), *Pseudoperonospora sp* (in particular cucurbit mildew and downy mildew of hop), *Bremia lactucae* (mildew of lettuce), *Peronospora tabacinae* (downy mildew of tobacco) and *Peronospora* parasitica (downy mildew of cabbage), Peronospora *viciae* (downy mildew of pea) and *Peronospora destructor* (downy mildew of onion);
    - of the group of adelomycetes:
- of the genus *Alternaria*, for example *Alternaria solani* (early blight of Solanaceae and in particular of tomato and potato),
    - of the genus *Guignardia*, in particular *Guignardia bidwelli* (black rot of grapevine),
    - of the genus *Oidium*, for example powdery mildew of grapevine (Uncinula necator), oidium of leguminous

crops, for example *Erysiphe polygoni* (powdery mildew of Cruciferae), *Leveillula taurica, Erysiphe cichoracearum*, *Sphaerotheca fuligena* (powdery mildew of cucurbits, of composites and of tomato), *Erysiphe communis* (powdery mildew of beetroot and cabbage), *Erysiphe pisi* (powdery mildew of pea and alfalfa), *Erysiphe polyphaga* (powdery mildew of bean and cucumber mildew), *Erysiphe umbelliferarum* (powdery mildew of umbellifera, in particular of carrot), *Sphaerotheca humuli* (hop mildew);

- of the group of soil fungi:
  - of the genus *Pythium sp.,*
  - of the genus *Aphanomyces sp*., in particular *Aphanomyces euteiches* (white root rot in pea), *Aphanomyces cochlioides* (dry rot of beet).

The expression "are applied to the vegetation to be treated" is understood to mean, for the purposes of the present text, that the fungicidal composition of the invention may be applied by means of various treatment processes such as:

- spraying a liquid comprising a composition onto the aerial parts of said vegetation,
- dusting, incorporation of granules or powders into the soil, watering around said vegetation and, in the case of trees, injection or daubing,
- coating of or formation of a film on seeds of said vegetation using a broth comprising a composition.

The spraying of a liquid onto the aerial parts of the crops to be treated is the preferred treatment process.
The following Examples illustrate the invention.

Example: Test of a composition against vine downy mildew (*Plasmopara viticola;* preventive action)

*Protocol*

Grapevine plants are grown (var. Chardonnay) on sandy soil in plastic pots, with one plant per pot. The plants which are two months old (6 to 7 developed leaves) are sprayed with compound (I) and compound (II), either alone, or as a mixture.
The fungicidal active ingredients, either alone, or as a mixture, are applied at a dose equivalent to 500 litres/ha.
The compound (I)/compound (II) ratio studied is 1/2.
Three days after the treatment, each plant is inoculated by spraying an aqueous suspension of *Plasmopara viticola* sporangia obtained from contaminated leaves. The sporangium concentration is about 100 000 units per ml.
After contamination, the plants are incubated for two days at 18°C under a saturated atmosphere, and then for 5 days at about 20°C with a relative humidity of 90-100%.
Seven days after the contamination, the symptoms are evaluated in terms of underside surface of the leaves which are infected, compared with the untreated but contaminated plants.
The efficacy of the treatment is calculated using the following Abbott formula:

$$\text{Efficacy} = \frac{\text{(untreated) - treated}}{\text{untreated}} \times 100$$

*Calculation and analysis*

The concentrations of the fungicides, alone or as a mixture, giving 50%, 70% or 90% efficacy for each component, in the appropriate test, are determined based on the dose/response sigmoid curve model and their corresponding confidence intervals. The analysis of the results is carried out using the Tammes or Colby model.

*Test on compound (Ia) and compound (IIa):*

| | Concentration (mg/l) | Efficacy (%) | Synergy (Colby) |
|---|---|---|---|
| Compound (Ia) | 5 | 40 | - |
| Fenamidone | 10 | 72 | - |
| Compound (Ia) + fenamidone (ratio 1/2) | 5 + 10 | 87 | 3.8 |

Untreated control: 90% of sporulated surface

The compositions according to the invention comprising compound (Ia) and fenamidone in the 1/2 ratio, at respective concentrations of 5 and 10 mg/l, make it possible to reduce the doses of active ingredients while still obtaining a very good efficacy. A synergistic effect can of course be demonstrated at other dosage rates and ratios.

The invention also provides a product comprising a compound (I) and a compound (II) as a combined preparation for simultaneous, separate or sequential use in controlling phytopathogenic fungi of a crop.

## Claims

**1.** A fungicidal composition comprising:

a) at least one compound (I) which is a pyridylmethylbenzamide derivative of formula (I):

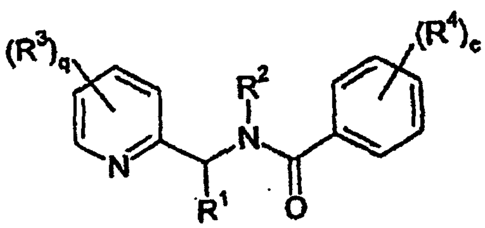

(I)

in which:

- $R^1$ is chosen from a hydrogen atom, an unsubstituted or substituted alkyl radical and an unsubstituted or substituted acyl or alkoxycarbonyl radical;
- $R^2$ is chosen from a hydrogen atom and an unsubstituted or substituted alkyl radical;
- $R^3$ and $R^4$, which are identical or different, are independently chosen from a halogen atom, the hydroxyl radical, the cyano radical, the nitro radical, the $-SF_5$ radical, the trialkylsilyl radical, an unsubstituted or substituted amino radical, an acyl radical, an alkoxycarbonyl radical and a group E, OE or SE, in which E is chosen from an alkyl, alkenyl, alkynyl, cycloalkyl, cycloalkenyl, aryl and heterocyclyl radical, each of which is unsubstituted or substituted;
- c represents 0, 1, 2, 3, 4 or 5;
- q represents 0, 1, 2, 3 or 4;

wherein the term "substituted" means that the radicals thus described are substituted with one or more radicals chosen from chlorine, bromine, fluorine, iodine, alkyl, alkoxy, hydroxyl, intro, amino, cyano, and acyl; or an agriculturally acceptable acid addition salt thereof; and
b) at least one compound (II) capable of inhibiting the transport of electrons of the respiratory chain of mitochondrial ubiquinol:ferricytochrome-c oxidoreductase (complex III) in phytopathogenic fungal organisms; and an agriculturally acceptable carrier and/or surfactant.

**2.** A fungicidal composition according to Claim 1, **characterized in that** compound (I) possesses at least one of the following characteristics, taken in isolation or in combination:

- $R^1$ and $R^2$ which are identical or different, are independently chosen from a hydrogen atom and an unsubstituted or substituted alkyl radical;
- $R^3$ and $R^4$, which are identical or different, are independently chosen from a halogen atom, the hydroxyl radical, the nitro radical, an unsubstituted or substituted amino radical, an acyl radical, and a group E, OE or SE, in which E is chosen from an alkyl, cycloalkyl, phenyl and heterocyclyl radical, each of which is unsubstituted or substituted;
- c represents 0, 1, 2 or 3;
- q represents 0, 1, 2 or 3;

and wherein the term "substituted" has the same meaning as in Claim 1.

**3.** A fungicidal composition according to Claim 1, **characterized in that** compound (I) possesses at least one of the following characteristics, taken in isolation or in combination:

- $R^1$ and $R^2$, which are identical or different, are independently chosen from a hydrogen atom and a methyl or ethyl radical;
- $R^3$ and $R^4$, which are identical or different, are independently chosen from a halogen atom, the nitro radical, an optionally substituted amino radical and an alkyl, cycloalkyl, phenyl or heterocyclyl radical, each of which is unsubstituted or substituted;
- c represents 1 or 2;
- q represents 1 or 2;

and wherein the term "substituted" has the same meaning as in Claim 1.

**4.** A fungicidal composition according to Claim 1, **characterized in that** compound (I) possesses at least one of the following characteristics:

- $R^1$ and $R^2$ each represent a hydrogen atom;
- $R^3$ and $R^4$, which are identical or different, are independently chosen from a halogen atom, the nitro radical, an alkyl radical and the trifluoromethyl radical;
- c and q represent, independently of each other, 2.

**5.** A fungicidal composition according to Claim 1, **characterized in that** the compound of formula (I) is chosen from:

- 2,6-dichloro-*N*-{[3-chloro-5-(trifluoromethyl)-2-pyridinyl]methyl}benzamide;
- *N*-{[3-chloro-5-(trifluoromethyl)-2-pyridinyl]methyl}-2-fluoro-6-nitrobenzamide; and
- *N*-{[3-chloro-5-(trifluoromethyl)-2-pyridinyl]methyl}-2-methyl-6-nitrobenzamide,

and their agriculturally acceptable acid addition salts.

**6.** A fungicidal composition according to any one of the preceding claims, **characterized in that** compound (II) is chosen from the compounds (IIa) capable of inhibiting the reduction of a ubiquinone, at a domain of complex III called $Q_{in}$ or $Q_i$.

**7.** A fungicidal composition according to any one of claims 1 to 5, **characterized in that** compound (II) is chosen from the compounds (IIb) capable of inhibiting the reduction of ubiquinol, at a domain of complex III called $Q_{out}$ or $Q_o$.

**8.** A fungicidal composition according to Claim 6, **characterized in that** compounds (IIa) are chosen from cyazofamid

and antimycin.

9. A fungicidal composition according to Claim 7 **characterized in that** compounds (IIb) are chosen from azoxystrobin, dicostrobin, kresoxim-methyl, metominostrobin, pyraclostrobin, pycoxystrobin, trifloxystrobin, fenamidone and famoxadone.

10. A fungicidal composition according to any one of the preceding claims, **characterized in that** compound (I) is chosen from 2,6-dichloro-*N*-{[3-chloro-5-(trifluoromethyl)-2-pyridinyl]methyl}benzamide; *N*-{[3-chloro-5-(trifluoromethyl)-2-pyridinyl]methyl}-2-fluoro-6-nitrobenzamide and *N*-{[3-chloro-5-(trifluoromethyl)-2-pyridinyl]methyl}-2-methyl-6-nitrobenzamide and compound (II) is chosen from cyazofamid, antimycin, azoxystrobin, dicostrobin, kresoxim-methyl, metominostrobin, pyraclostrobin, pycoxystrobin, trifloxystrobin, fenamidone and famoxadone.

11. A fungicidal composition according to any one of the preceding claims, **characterized in that** compound (I) is 2,6-dichloro-N-{[3-chloro-5-(trifluoromethyl)-2-pyridinyl]methyl}benzamide and compound (II) is fenamidone.

12. A fungicidal composition according to any one of the preceding claims, **characterised in that** the ratio by weight of the compound (I)/compound (II) is from 1/10 to 10/1.

13. A fungicidal composition according to Claim 12, **characterized in that** the ratio is from 1/5 to 5/1.

14. Fungicidal compositions according to Claim 13, **characterized in that** the ratio is from 1/5 to 2/1.

15. A fungicidal composition according to any one of the preceding claims, which comprises from 0.5 to 99% by weight of the combination of compound (I) and compound (II).

16. Method for controlling phytopathogenic fungi of a crop at a locus which comprises applying thereto a compound (I) and compound (II) as defined in claim 1.

17. Method according to claim 16 for controlling, curatively or preventively, phytopathogenic fungi of a crop, **characterized in that** an effective (agronomically effective) and nonphytotoxic quantity of a fungicidal composition according to any one of Claims 1 to 15 is applied to the soil where plants grow or are capable of growing, to the leaves and/or the fruit of plants or to the seeds of plants.

18. Method according to Claim 16, **characterized in that** the fungicidal composition is applied by spraying a liquid on the aerial parts of a crop to be treated.

19. Method according to Claim 17 or 18, **characterized in that** the quantity of fungicidal composition corresponds to a dose of compound (I) and of compound (II) from 0.1 g/ha to 200 g/ha.

20. Method according to Claim 17, 18 or 19, **characterized in that** the crop treated is grapevine.

21. Method according to the preceding claim, **characterized in that** the phytopathogenic fungus treated is vine downy mildew.

22. Product comprising a compound (I) and a compound (II) as defined in claim 1 as a combined preparation for simultaneous, separate or sequential use in controlling phytopathogenic fungi of a crop.

## Patentansprüche

1. Fungizide Zusammensetzung, enthaltend:

    a) mindestens eine Verbindung (I), bei der es sich um ein Pyridylmethylbenzamidderivat der Formel (I) handelt,

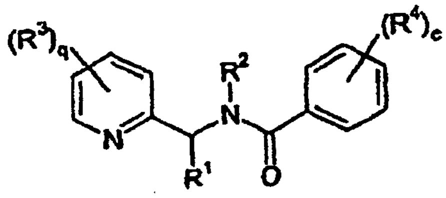

(I)

in der

- $R^1$ aus der Reihe Wasserstoffatom, unsubstituierter oder substituierter Alkylrest und unsubstituierter oder substituierter Acyl- oder Alkoxycarbonylrest stammt;
- $R^2$ aus der Reihe Wasserstoffatom und unsubstituierter oder substituierter Alkylrest stammt;
- $R^3$ und $R^4$, die gleich oder verschieden sind, unabhängig aus der Reihe Halogenatom, Hydroxyrest, Cyanorest, Nitrorest, $-SF_5$-Rest, Trialkylsilylrest, unsubstituierter oder substituierter Aminorest, Acylrest, Alkoxycarbonylrest und Gruppe E, OE oder SE stammen, in der E aus der Reihe Alkyl-, Alkenyl-, Alkinyl-, Cycloalkyl-, Cycloalkenyl-, Aryl- und Heterocyclylrest, der jeweils unsubstituiert oder substituiert ist, stammt;
- c 0, 1, 2, 3, 4 oder 5 bedeutet;
- q 0, 1, 2, 3 oder 4 bedeutet;

wobei der Begriff "substituiert" bedeutet, daß die so beschriebenen Reste durch einen oder mehrere Reste aus der Reihe Chlor, Brom, Fluor, Iod, Alkyl, Alkoxy, Hydroxy, Nitro, Amino, Cyano und Acyl substituiert sind;

oder eines ihrer landwirtschaftlich unbedenklichen Säureadditionssalze; und

b) mindestens eine Verbindung (II), die fähig ist, den Elektronentransport der Atmungskette der Mitochondrien-Ubichinol:Ferricytochrom-c-Oxidoreduktase (Komplex III) in phytopathogenen pilzlichen Organismen zu hemmen;

sowie einen landwirtschaftlich unbedenklichen Träger und/oder ein landwirtschaftlich unbedenkliches Tensid.

2. Fungizide Zusammensetzung nach Anspruch 1, **dadurch gekennzeichnet, daß** die Verbindung (I) mindestens eines der folgenden Merkmale, und zwar allein oder in Kombination, aufweist:

- $R^1$ und $R^2$, die gleich oder verschieden sind, stammen unabhängig aus der Reihe Wasserstoffatom und unsubstituierter oder substituierter Alkylrest;
- $R^3$ und $R^4$, die gleich oder verschieden sind, stammen unabhängig aus der Reihe Halogenatom, Hydroxyrest, Nitrorest, unsubstituierter oder substituierter Aminorest, Acylrest und eine Gruppe E, OE oder SE, wobei E aus der Reihe Alkyl-, Cycloalkyl, Phenyl- und Heterocyclylrest, der jeweils unsubstituiert oder substituiert ist, stammt;
- c bedeutet 0, 1, 2 oder 3;
- q bedeutet 0, 1, 2 oder 3;

und wobei der Begriff "substituiert" die gleiche Bedeutung wie in Anspruch 1 aufweist.

3. Fungizide Zusammensetzung nach Anspruch 1, **dadurch gekennzeichnet, daß** die Verbindung (I) mindestens eines der folgenden Merkmale, und zwar allein oder in Kombination, aufweist:

- $R^1$ und $R^2$, die gleich oder verschieden sind, stammen unabhängig aus der Reihe Wasserstoffatom und Methyl- oder Ethylrest;
- $R^3$ und $R^4$, die gleich oder verschieden sind, stammen unabhängig aus der Reihe Halogenatom, Nitrorest, gegebenenfalls substituierter Aminorest und Alkyl-, Cycloalkyl-, Phenyl- oder Heterocyclylrest, der jeweils unsubstituiert oder substituiert ist;
- c bedeutet 1 oder 2;
- q bedeutet 1 oder 2;

und wobei der Begriff "substituiert" die gleiche Bedeutung wie in Anspruch 1 aufweist.

**4.** Fungizide Zusammensetzung nach Anspruch 1, **dadurch gekennzeichnet, daß** die Verbindung (I) mindestens eine der folgenden Eigenschaften aufweist:

- $R^1$ und $R^2$ bedeuten jeweils ein Wasserstoffatom;
- $R^3$ und $R^4$, die gleich oder verschieden sind, stammen unabhängig aus der Reihe Halogenatom, Nitrorest, Alkylrest und Trifluormethylrest;
- c und q bedeuten unabhängig voneinander 2.

**5.** Fungizide Zusammensetzung nach Anspruch 1, **dadurch gekennzeichnet, daß** die Verbindung der Formel (I) aus der folgenden Reihe stammt:

- 2,6-Dichlor-*N*-{[3-chlor-5-(trifluormethyl)-2-pyridinyl]methyl}benzamid;
- *N*-{[3-Chlor-5-(trifluormethyl)-2-pyridinyl]methyl}-2-fluor-6-nitrobenzamid; und
- *N*-{[3-Chlor-5-(trifluormethyl)-2-pyridinyl]methyl}-2-methyl-6-nitrobenzamid,

sowie ihre landwirtschaftlich annehmbaren Säureadditionssalze.

**6.** Fungizide Zusammensetzung nach einem der vorhergehenden Ansprüche, **dadurch gekennzeichnet, daß** die Verbindung (II) aus der Reihe der Verbindungen (IIa), die fähig sind, die Reduktion eines Ubichinons an einer mit $Q_{in}$ oder $Q_i$ bezeichneten Domäne des Komplexes III zu hemmen, stammt.

**7.** Fungizide Zusammensetzung nach einem der Ansprüche 1 bis 5, **dadurch gekennzeichnet, daß** die Verbindung (II) aus der Reihe der Verbindungen (IIb), die fähig sind, die Reduktion eines Ubichinols an einer mit $Q_{out}$ oder $Q_o$ bezeichneten Domäne des Komplexes III zu hemmen, stammt.

**8.** Fungizide Zusammensetzung nach Anspruch 6, **dadurch gekennzeichnet, daß** die Verbindungen (IIa) aus der Reihe Cyazofamid und Antimycin stammen.

**9.** Fungizide Zusammensetzung nach Anspruch 7, **dadurch gekennzeichnet, daß** die Verbindungen (IIb) aus der Reihe Azoxystrobin, Dicostrobin, Kresoxim-Methyl, Metominostrobin, Pyraclostrobin, Pycoxystrobin, Trifloxystrobin, Fenamidon und Famoxadon stammen.

**10.** Fungizide Zusammensetzung nach einem der vorhergehenden Ansprüche, **dadurch gekennzeichnet, daß** die Verbindung (I) aus der Reihe 2,6-Dichlor-*N*-{[3-chlor-5-(trifluormethyl)-2-pyridinyl]methyl}benzamid; *N*-{[3-Chlor-5-(trifluormethyl)-2-pyridinyl]methyl}-2-fluor-6-nitrobenzamid und *N*-{[3-Chlor-5-(trifluormethyl)-2-pyridinyl]methyl}-2-methyl-6-nitrobenzamid und die Verbindung (II) aus der Reihe Cyazofamid, Antimycin, Azoxystrobin, Dicostrobin, Kresoxim-Methyl, Metominostrobin, Pyraclostrobin, Pycoxystrobin, Trifloxystrobin, Fenamidon und Famoxadon stammt.

**11.** Fungizide Zusammensetzung nach einem der vorhergehenden Ansprüche, **dadurch gekennzeichnet, daß** es sich bei der Verbindung (I) um 2,6-Dichlor-*N*-{[3-chlor-5-(trifluormethyl)-2-pyridinyl]methyl}benzamid und bei der

Verbindung (II) um Fenamidon handelt.

**12.** Fungizide Zusammensetzung nach einem der vorhergehenden Ansprüche, **dadurch gekennzeichnet, daß** das Gewichtsverhältnis Verbindung (I)/Verbindung (II) 1/10 bis 10/1 beträgt.

**13.** Fungizide Zusammensetzung nach Anspruch 12, **dadurch gekennzeichnet, daß** das Verhältnis 1/5 bis 5/1 beträgt.

**14.** Fungizide Zusammensetzung nach Anspruch 13, **dadurch gekennzeichnet, daß** das Verhältnis 1/5 bis 2/1 beträgt.

**15.** Fungizide Zusammensetzung nach einem der vorhergehenden Ansprüche, die 0,5 - 99 Gew.-%. an Kombination von Verbindung (I) und Verbindung (II) enthält.

**16.** Verfahren zur Bekämpfung von phytopathogenen Pilzen einer Kultur an einem Ort, **dadurch gekennzeichnet, daß** man eine Verbindung (I) und eine Verbindung (II) nach Anspruch 1 darauf aufbringt.

**17.** Verfahren nach Anspruch 16 für die kurative oder vorbeugende Bekämpfung von phytopathogenen Pilzen einer Kultur, **dadurch gekennzeichnet, daß** man eine wirksame (landwirtschaftlich wirksame) und nichtphytotoxische Menge an einer fungiziden Zusammensetzung nach einem der Ansprüche 1 bis 15 auf den Boden, auf dem Pflanzen wachsen oder wachsen können, auf die Blätter und/oder die Früchte von Pflanzen oder auf die Samen von Pflanzen ausbringt.

**18.** Verfahren nach Anspruch 16, **dadurch gekennzeichnet, daß** die fungizide Zusammensetzung dadurch ausgebracht wird, daß man eine Flüssigkeit auf die oberirdischen Teile einer zu behandelnden Kultur spritzt.

**19.** Verfahren nach Anspruch 17 oder 18, **dadurch gekennzeichnet, daß** die Menge an fungizider Zusammensetzung einer Dosis von Verbindung (I) und Verbindung (II) von 0,1 g/ha bis 200 g/ha entspricht.

**20.** Verfahren nach Anspruch 17, 18 oder 19, **dadurch gekennzeichnet, daß** es sich bei der behandelten Kultur um die Rebe handelt.

**21.** Verfahren nach dem vorhergehenden Anspruch, **dadurch gekennzeichnet, daß** es sich bei dem behandelten phytopathogenen Pilz um den Falschen Mehltau der Rebe handelt.

**22.** Produkt, enthaltend eine Verbindung (I) und eine Verbindung (II) nach Anspruch 1 als Kombinationspräparat für die gleichzeitige, getrennte oder aufeinanderfolgende Verwendung bei der Bekämpfung von phytopathogenen Pilzen einer Kultur.

## Revendications

**1.** Composition fongicide comprenant :

a) au moins un composé (I) qui est un dérivé pyridylméthylbenzamide de formule (I):

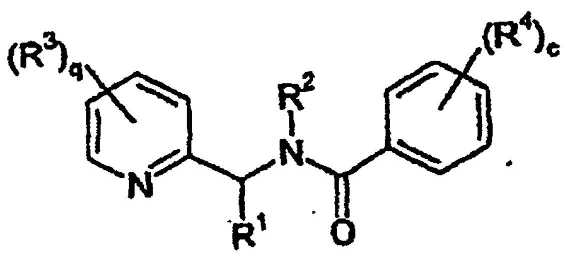

(I)

dans laquelle :

- $R^1$ est choisi parmi un atome d'hydrogène, un radical alkyle non substitué ou substitué et un radical acyle ou alcoxycarbonyle non substitué ou substitué ;
- $R^2$ est choisi parmi un atome d'hydrogène et un radical alkyle non substitué ou substitué ;
- $R^3$ et $R^4$, qui sont identiques ou différents, sont choisis indépendamment parmi un atome d'halogène, le radical hydroxyle, le radical cyano, le radical nitro, le radical $-SF_5$, le radical trialkylsilyle, un radical amino non substitué ou substitué, un radical acyle, un radical alcoxycarbonyle et un groupe E, OE ou SE, où E est choisi parmi un radical alkyle, alcényle, alcynyle, cycloalkyle, cycloalcényle, aryle et hétérocyclyle, chacun d'eux étant non substitué ou substitué ;
- c représente 0, 1, 2, 3, 4 ou 5 ;
- q représente 0, 1, 2, 3 ou 4 ;

dans laquelle le terme "substitué" signifie que les radicaux ainsi décrits sont substitués par un ou plusieurs radicaux choisis parmi les radicaux chlore, brome, fluor, iode, alkyle, alcoxy, hydroxyle, nitro, amino, cyano et acyle ;
ou un sel d'addition d'acide acceptable en agriculture de ce composé ; et
b) au moins un composé (II) capable d'inhiber le transport d'électrons de la chaîne respiratoire de l'ubiquinol : ferricytochrome-c oxydoréductase mitochondriale (complexe III) dans les organismes fongiques phytopathogènes ; et un véhicule et/ou tensioactif acceptable en agriculture.

2. Composition fongicide selon la revendication 1, **caractérisée en ce que** le composé (I) possède au moins une des caractéristiques suivantes, prises isolément ou en combinaison :

   - $R^1$ et $R^2$, qui sont identiques ou différents, sont choisis indépendamment parmi un atome d'hydrogène et un radical alkyle non substitué ou substitué ;
   - $R^3$ et $R^4$, qui sont identiques ou différents, sont choisis indépendamment parmi un atome d'halogène, le radical hydroxyle, le radical nitro, un radical amino non substitué ou substitué, un radical acyle et un groupe E, OE ou SE, où E est choisi parmi un radical alkyle, cycloalkyle, phényle et hétérocyclyle, chacun d'eux étant non substitué ou substitué ;
   - c représente 0, 1, 2 ou 3 ;
   - q représente 0, 1, 2 ou 3.

   et dans laquelle le terme "substitué" a la même signification que dans la revendication 1.

3. Composition fongicide selon la revendication 1, **caractérisée en ce que** le composé (I) possède au moins une des caractéristiques suivantes, prises isolément ou en combinaison :

   - $R^1$ et $R^2$, qui sont identiques ou différents, sont choisis indépendamment parmi un atome d'hydrogène et un radical méthyle ou éthyle ;
   - $R^3$ et $R^4$, qui sont identiques ou différents, sont choisis indépendamment parmi un atome d'halogène, le radical nitro, un radical amino éventuellement substitué et un radical alkyle, cycloalkyle, phényle ou hétérocyclyle, chacun d'eux étant non substitué ou substitué ;
   - c représente 1 ou 2 ;
   - q représente 1 ou 2 ;

   et dans laquelle le terme "substitué" a la même signification que dans la revendication 1.

4. Composition fongicide selon la revendication 1, **caractérisée en ce que** le composé (I) possède au moins une des caractéristiques suivantes :

   - $R^1$ et $R^2$ représentent chacun un atome d'hydrogène ;
   - $R^3$ et $R^4$, qui sont identiques ou différents, sont choisis indépendamment parmi un atome d'halogène, le radical nitro, un radical alkyle et le radical trifluorométhyle ;
   - c et q représentent, indépendamment l'un de l'autre, la valeur 2.

5. Composition fongicide selon la revendication 1, **caractérisée en ce que** le composé de formule (I) est choisi parmi :

- le 2,6-dichloro-N-{[3-chloro-5-(trifluorométhyl)-2-pyridinyl]méthyl}benzamide;
- le N-{[3-chloro-5-(trifluorométhyl)-2-pyridinyl]-méthyl}-2-fluoro-6-nitrobenzamide; et
- le N-{[3-chloro-5-(trifluorométhyl)-2-pyridinyl]-méthyl}-2-méthyl-6-nitrobenzamide,

et leurs sels d'addition d'acide acceptables en agriculture.

**6.** Composition fongicide selon l'une quelconque des revendications précédentes, **caractérisée en ce que** le composé (II) est choisi parmi les composés (IIa) capables d'inhiber la réduction d'une ubiquinone, au niveau d'un domaine du complexe III appelé $Q_{in}$ ou $Q_i$.

**7.** Composition fongicide selon l'une quelconque des revendications 1 à 5, **caractérisée en ce que** le composé (II) est choisi parmi les composés (IIb) capables d'inhiber la réduction de l'ubiquinol, au niveau d'un domaine du complexe III appelé $Q_{out}$ ou $Q_o$.

**8.** Composition fongicide selon la revendication 6, **caractérisée en ce que** les composés (IIa) sont choisis parmi le cyazofamide et l'antimycine.

**9.** Composition fongicide selon la revendication 7 **caractérisée en ce que** les composés (IIb) sont choisis parmi l'azoxystrobine, la dicostrobine, le krésoxime-méthyle, la métominostrobine, la pyraclostrobine, la pycoxystrobine, la trifloxystrobine, la fénamidone et la famoxadone.

**10.** Composition fongicide selon l'une quelconque des revendications précédentes, **caractérisée en ce que** le composé (I) est choisi parmi le 2,6-dichloro-N-{[3-chloro-5-(trifluorométhyl)-2-pyridinyl]méthyl}-benzamide ; le N-{[3-chloro-5-(trifluorométhyl)-2-pyridinyl]méthyl}-2-fluoro-6-nitrobenzamide et le N-{[3-chloro-5-(trifluorométhyl)-2-pyridinyl]méthyl}-2-méthyl-6-nitrobenzamide, et le composé (II) est choisi parmi le cyazofamide, l'antimycine, l'azoxystrobine, la dicostrobine, le krésoxime-méthyle, la métominostrobine, la pyraclostrobine, la pycoxystrobine, la trifloxystrobine, la fénamidone et la famoxadone.

**11.** Composition fongicide selon l'une quelconque des revendications précédentes, **caractérisée en ce que** le composé (I) est le 2,6-dichloro-N-{[3-chloro-5-(trifluorométhyl)-2-pyridinyl]méthyl}benzamide et le composé (II) est la fénamidone.

**12.** Composition fongicide selon l'une quelconque des revendications précédentes, **caractérisée en ce que** le rapport en poids entre le composé (I) et le composé (II) est de 1/10 à 10/1.

**13.** Composition fongicide selon la revendication 12, **caractérisée en ce que** le rapport est de 1/5 à 5/1.

**14.** Compositions fongicides selon la revendication 13, **caractérisées en ce que** le rapport est de 1/5 à 2/1.

**15.** Composition fongicide selon l'une quelconque des revendications précédentes, qui comprend de 0,5 à 99% en poids de la combinaison entre le composé (I) et le composé (II).

**16.** Procédé pour lutter contre les champignons phytopathogènes d'une culture en un lieu, qui comprend l'application sur le lieu du composé (I) et du composé (II) tels que définis dans la revendication 1.

**17.** Procédé selon la revendication 16 permettant de lutter, de façon curative ou préventive, contre les champignons phytopathogènes d'une culture, **caractérisé en ce que** l'on applique une quantité efficace (efficace sur la plan agronomique) et non phytotoxique d'une composition fongicide selon l'une quelconque des revendications 1 à 15 sur le sol dans lequel les plantes poussent ou sont capables de pousser, sur les feuilles et/ou les fruits des plantes ou sur les semences des plantes.

**18.** Procédé selon la revendication 16, **caractérisé en ce que** l'on applique la composition fongicide en pulvérisant un liquide sur les parties aériennes d'une culture à traiter.

**19.** Procédé selon la revendication 17 ou 18, **caractérisé en ce que** la quantité de composition fongicide correspond à une dose de composé (I) et de composé (II) de 0,1 g/ha à 200 g/ha.

**20.** Procédé selon la revendication 17, 18 ou 19, **caractérisé en ce que** la culture traitée est la vigne.

**21.** Procédé selon la revendication précédente, **caractérisé en ce que** le champignon phytopathogène traité est le mildiou de la vigne.

**22.** Produit comprenant un composé (I) et un composé (II) tels que définis dans la revendication 1 en préparation combinée pour usage simultané, séparé ou séquentiel dans la lutte contre les champignons phytopathogènes d'une culture.